**Europäisches Patentamt**

**European Patent Office**

**Office européen des brevets**

(11) Veröffentlichungsnummer: **0 233 554**

**A2**

(12) # EUROPÄISCHE PATENTANMELDUNG

(21) Anmeldenummer: **87101549.1**

(51) Int. Cl.³: **E 03 B 5/02**

(22) Anmeldetag: **05.02.87**

(30) Priorität: **08.02.86 DE 3604056**

(43) Veröffentlichungstag der Anmeldung:
**26.08.87 Patentblatt 87/35**

(84) Benannte Vertragsstaaten:
**AT BE CH DE ES FR GB GR IT LI NL SE**

(71) Anmelder: **Bomin Solar GmbH & Co KG**
**Industriestrasse 8-10**
**D-7850 Lörrach-Haagen(DE)**

(72) Erfinder: **Klaas, Otto, Dipl.-Ing.**
**Sehringer Strasse 1a**
**D-7840 Müllheim 15(DE)**

(74) Vertreter: **Rau, Manfred, Dr. Dipl.-Ing. et al,**
**Rau & Schneck, Patentanwälte Königstrasse 2**
**D-8500 Nürnberg 1(DE)**

(54) **Anordnung zum Aufbau des Entnahme-Druckes in einem Wasserversorgungssystem.**

(57) Bei einer Anordnung zum Aufbau des Entnahme-Druckes in einem Wasserversorgungssystem umfassend eine zwischen einem Wasserspeicher und dem Versorgungssystem angeordnete, in Abhängigkeit von einem den Druck in dem Versorgungssystem erfassenden Druckschalter arbeitende Pumpe und ein der Pumpe nachgeordnetes, federbeaufschlagtes Rückschlagventil ist zur Erzielung eines konstanten Entnahme-Druckes bei Vermeidung eines Druckspeichers vorgesehen, daß die Pumpe auch in Abhängigkeit von einem entsprechend dem Öffnungs- bzw. Schließzustand des Rückschlagventils (6) betätigten, zu dem Druckschalter (8) parallelgeschalteten Schalter (Reed-Relais 13) derart einschaltbar ist, daß bei geöffnetem Rückschlagventil (6) die Pumpe (1) eingeschaltet ist.

FIG. 1

**EP 0 233 554 A2**

Anordnung zum Aufbau des Entnahme-Druckes in einem
Wasserversorgungssystem
-------------------------------------------------------

Die Erfindung richtet sich auf eine Anordnung zum Aufbau des Entnahme-Druckes in einem Wasserversorgungssystem umfassend eine zwischen einem Wasserspeicher und dem Versorgungssystem angeordnete, in Abhängigkeit von einem den Druck in dem Versorgungssystem erfassenden Druckschalter arbeitende Pumpe und ein der Pumpe nachgeordnetes, wiederbeaufschlagtes Rückschlagventil.

Anordnungen dieser Art werden für Wasserversorgungssysteme dann verwendet, wenn sich ein Druckaufbau durch einen hochliegenden Vorratsbehälter unter Ausnutzung des auf die Höhendifferenz zwischen Vorratsbehälter und Entnahmestelle resultierenden Druckunterschieds nicht realisieren läßt bzw. wenn ein so erzielbarer Druck nicht hinreichend hoch wäre.

Ein Problem bei Anordnungen der in Betracht stehenden Art liegt darin, daß bei der Wasserentnahme bzw. bei dem aufgrund der Druckänderung damit einhergehenden Anlaufen bzw. Anhalten der Pumpe permanente Druckschwankungen auftreten, welche zu einer unerwünschten Folge von Aus- und Einschaltvorgängen führen. Dementsprechend wurde bei derartigen Anordnungen herkömmlicherweise zwischen der Pumpe und dem Versorgungssystem ein Druckspeicher zum Ausgleich dieser Druckschwankungen angeordnet.

Der Erfindung liegt die Aufgabe zugrunde, einen definiert vorgebbaren Entnahme-Druck im Versorgungssystem unter Vermeidung der Zwischenschaltung eines Druckspeichers zu ermöglichen.

Diese Aufgabe wird erfindungsgemäß dadurch gelöst, daß die Pumpe auch in Abhängigkeit von einem entsprechend dem Öffnungs- bzw. Schließzustand des Rückschlagventils betätigten, zu dem Druckschalter parallelgeschalteten Schalter derart einschaltbar ist, daß bei geöffnetem Rückschlagventil die Pumpe eingeschaltet ist.

Durch das Parallelschalten eines weiteren, den Betrieb der Pumpe ermöglichenden Schalters zu dem Druckschalter wird sichergestellt, daß auch dann, wenn aufgrund einer sich ausbildenden Druckänderung der Druckschwellwert des Druckschalters überschritten wird und der Druckschalter dementsprechend öffnet, die Pumpe weiterläuft, weil das Rückschlagventil geöffnet ist und dementsprechend der diesem zugeordnete Schalter geschlossen ist. Erst wenn die Entnahme aus dem Versorgungssystem beendet
wird, d.h. der ausfließende Volumenstrom zu Null
wird und sich im Gesamtsystem ein Druckgleichgewicht
einstellt, schließt das Rückschlagventil aufgrund
der Federwirkung von dessen Rückstellfeder. Dies
bedeutet, daß einerseits aufgrund des aufgebauten
Druckes durch die Pumpwirkung der Pumpe der Druckschalter öffnet, da sein Druckschwellwert überschritten wird, und daß andererseits dann auch der dem
Rückschlagventil zugeordnete Schalter geöffnet
und somit die Pumpe abgeschaltet wird.

Vorteilhafterweise ist der dem Rückschlagventil
zugeordnete Schalter als Reed-Relais ausgebildet,
wobei vorgesehen sein kann, daß das für die Betätigung des Reed-Relais erforderliche Magnetfeld
von einem mit dem Ventilschließkörper verbundenen
Permanentmagneten erzeugt wird. Bei einem derartigen
Reed-Relais sind die Schaltkontakte in einem mit
Schutzgas gefüllten Glasröhrchen untergebracht,
wobei diese Kontakte magnetisierbar sind, so daß
durch die Einwirkung eines äußeren Magnetfeldes
der Schaltkontakt hergestellt bzw. unterbrochen
werden kann. Gemäß der Erfindung kann das die
Relaiskontakte aufnehmende Glasröhrchen an der
Außenseite des Rückschlagventils angeordnet sein,
so daß durch eine Längsverlagerung des mit dem
Ventilschließkörper verbundenen Permanentmagneten
die Kontakte geöffnet bzw. geschlossen werden.

In weiterer Ausgestaltung der Erfindung ist dem
Druckschalter ein Drosselrückschlagventil zugeordnet. Dieses Drosselrückschlagventil dient zur
Glättung von auftretenden Druckspitzen, um einen

- 4 -

Ausschalteffekt zu vermeiden, bevor das Reed-Relais geschlossen ist.

Alternativ hierzu kann auch eine elektrische Abfallverzögerungsschaltung dem Druckschalter zugeordnet sein, welche ebenfalls gewährleistet, daß kurzfristige Druckspitzen nicht zu einem Schaltvorgang führen.

Die mechanische Ausgestaltung des Rückschlagventils wird vorteilhafterweise so gewählt, daß der Ventilschließkörper ausgehend von seiner Ruhelage ein lineares Hubspiel aufweist, längs dessen keine hydraulische Öffnungswirkung eintritt. Hierdurch wird die Schalt- Hysterese des Reed-Relais kompensiert.

Weitere Merkmale, Vorteile und Einzelheiten der Erfindung ergeben sich aus der folgenden Beschreibung einer bevorzugten Ausführungsform anhand der Zeichnung. Dabei zeigen

Fig. 1 ein schematisches hydraulisches bzw. elektrisches Blockschaltbild,

Fig. 2 einen Längsschnitt durch das der Pumpe nachgeordnete Rückschlagventil mit Reed-Relais und

Fig. 3 einen Schnitt längs der Linie A-B in Fig. 2.

Eine n der Zeichnung dargestellte erfindungsgemäße Anordnung umfaßt eine Pumpe 1, welche zwischen einem in der Zeichnung nicht dargestellten drucklosen Speicher und einem Versorgungssystem angeordnet ist, von welchem lediglich die Zuführleitung 2 eingezeichnet ist. Die Pumpe 1 fördert in Richtung der Pfeile 3.

Parallel zu der Pumpe 1 verläuft eine Überströmleitung 4 mit einem federbelasteten Rückschlagventil 5. Dieses einstellbare Rückschlagventil 5 dient zur Einstellung des maximal zulässigen Druckes im Versorgungssystem, wenn keine Entnahme erfolgt.

Der Pumpe 1 nachgeschaltet ist ebenfalls ein federbeaufschlagtes Rückschlagventil 6, dessen Ausgang mit der Leitung 2 zum Versorgungssystem verbunden ist.

Die Leitung 2 weist einen Anschluß 7 für einen Membran-Druckschalter 8 auf, wobei zwischen dem Membran-Druckschalter 8 und dem Anschluß 7 ein Drossel-Rückschlagventil 9 zur Glättung von Druckstößen angeordnet ist.

Der Membran-Druckschalter 8 stellt im geschlossenen Zustand eine elektrische Verbindung zwischen dem einen Anschluß 1o der Spannungsquelle (z.B. 22o Volt Netzspannung) und dem Antriebsmotor 11 für die Pumpe 1 her. Der andere Anschluß 12 der Spannungsquelle ist mit dem Antriebsmotor 11 direkt verbunden.

Parallel zu dem Membran-Druckschalter 8 ist ein Reed-Relais 13 geschaltet, welches an der Außenseite des Rückschlagventils 6 angebracht ist.

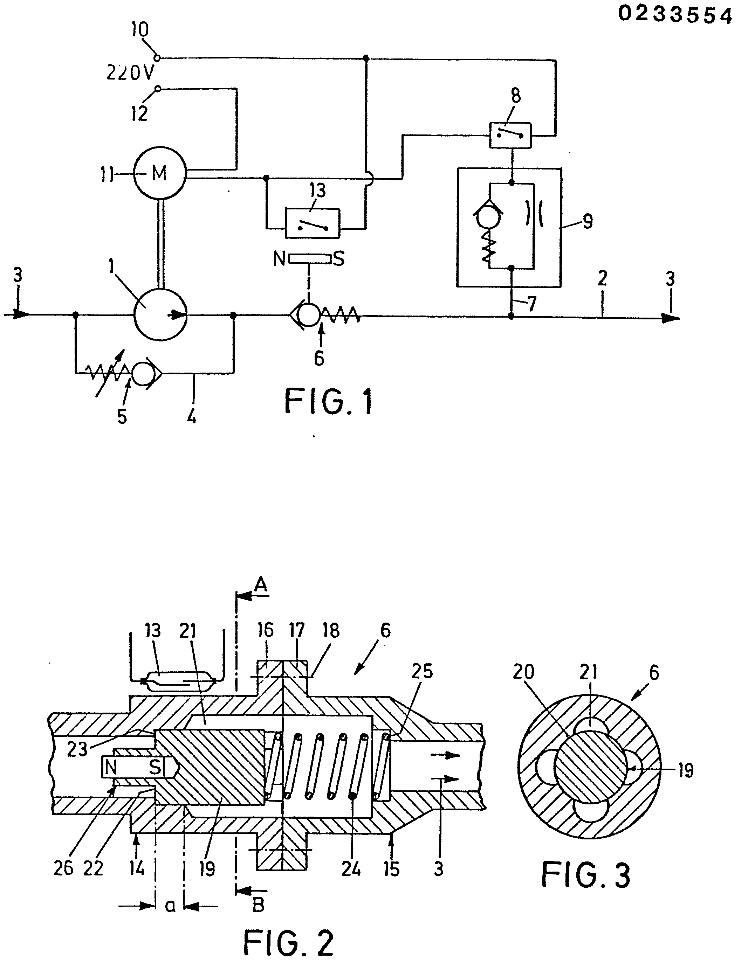

In Fig. 2 ist der Aufbau des Rückschlagventils im einzelnen dargestellt. Das Rückschlagventil 6 umfaßt zwei Teile 14 und 15, welche über Flansche 16 und 17 mittels lediglich schematisch angedeuteter Schrauben 18 verbunden sind.

In dem Ventil-Teil 14 ist ein Ventilschließkörper 19 angeordnet, welcher - wie insbesondere aus Fig. 3 ersichtlich - über Führungsvorsprünge 2o in Längsrichtung geführt ist. Im geöffneten, d.h. im in Fig. 2 nach rechts bewegten Zustand kann das Wasser in Richtung der Pfeile 3 durch die Durchströmkanäle 21 strömen. Diese Durchströmkanäle 21 enden - wie aus Fig. 2 ersichtlich - vor der stromaufwärtigen Stirnseite 22 des Ventilschließkörpers, welche in der Endlage des Ventilschließkörpers 19 an einer Ringschulter 23 des Ventil-Teils 14 anliegt. Hierdurch entsteht ein Hubspiel a, d.h. bei Bewegungsbeginn des Schließkörpers 19 aus seiner Ruhestellung heraus, d.h. von der Ringschulter 23 weg, erfolgt noch nicht sofort ein Öffnen des Ventils. In die Schließstellung wird der Ventilschließkörper 19 aufgrund der Wirkung einer Schraubenfeder 24 gedrück, welche sich an einer Ringschulter 25 in dem Ventil-Teil 15 abstützt.

An der Stirnfläche 22 des Ventilschließkörpers 19 ist ein Permanentmagnet 26 angeordnet. Wenn der Ventilschließkörper 19 aus der Schließstellung (in Fig. 2 nach rechts) herausbewegt wird, wird der Permanentmagnet 26 ebenfalls nach rechts bewegt, d.h. das das Reed-Relais durchsetzende Magnetfeld ändert sich und es findet eine Kontaktbetätigung statt. Durch das Hubspiel a wird die Schalt-Hysterese des Reed-Relais ausgeglichen.

Die erfindungsgemäße Anordnung arbeitet wie folgt:

Bei der Entnahme von Wasser aus dem Versorgungssystem entsteht ein Druckabfall, so daß der Membran-Druckschalter 8 aufgrund der Unterschreitung seines

Druckschwellwertes durchschaltet, wodurch der
Motor 11 der Pumpe 1 anläuft.

Durch die Pumpe 1 wird nun Druck aufgebaut, wobei
der erhöhte Druck an der Druckseite der Pumpe 1
dazu führt, daß der Ventilschließkörper 19 und
mit ihm der Permanentmagnet 26 in Fig. 2 nach
rechts in die Öffnungsstellung bewegt werden.
Aufgrund des sich ändernden Magnetfeld werden
nun die Kontakte des Reed-Relais 13 geschlossen,
was aber zunächst zu keiner Zustandsänderung führt,
da der Motor 11 ohnehin bereits läuft.

Während der Wasserentnahme läuft die Pumpe 1 weiter.
Hierdurch erhöht sich der Druck im Versorgungssystem,
so daß der Druck-Schwellwert des Membran-Druckschalters 8 wieder erreicht wird und dieser Schalter 8
öffnet. Sobald der Volumenstrom zu Null wird und
sich ein Druckgleichgewicht auf beiden Seiten
des Ventilschließkörpers 19 eingestellt hat, wird
dieser aufgrund der Wirkung der Feder 24 in seine
Ruhelage, d.h. in die Schließposition, zurückgedrückt. Erst jetzt öffnet das Reed-Relais und
dementsprechend wird erst jetzt der Antrieb der
Pumpe 1 unterbrochen, da nun sowohl das Reed-Relais
13 als auch der parallelliegende Membran-Druckschalter 8 geöffnet sind.

- 8 -

Patentansprüche

1. Anordnung zum Aufbau des Entnahme-Druckes in einem Wasserversorgungssystem umfassend eine zwischen einem Wasserspeicher und dem Versorgungssystem angeordnete, in Abhängigkeit von einem den Druck in dem Versorgungssystem erfassenden Druckschalter arbeitende Pumpe und ein der Pumpe nachgeordnetes, federbeaufschlagtes Rückschlagventil, dadurch gekennzeichnet, daß die Pumpe auch in Abhängigkeit von einem entsprechend dem Öffnungs- bzw. Schließzustand des Rückschlagventils (6) betätigten, zu dem Druckschalter (8) parallelgeschalteten Schalter (Reed-Relais 13) derart einschaltbar ist, daß bei geöffnetem Rückschlagventil (6) die Pumpe (1) eingeschaltet ist.

2. Anordnung nach Anspruch 1, dadurch gekennzeichnet, daß der dem Rückschlagventil (6) zugeordnete Schalter als Reed-Relais (13) ausgebildet ist.

3. Anordnung nach Anspruch 2, dadurch gekennzeichnet, daß das für die Betätigung des Reed-Relais (13) erforderliche Magnetfeld von einem mit dem Ventilschließkörper (19) verbundenen Permanentmagneten (26) erzeugt wird.

4. Anordnung nach Anspruch 3, dadurch gekennzeichnet, daß der Ventilschließkörper (19) ausgehend von seiner Ruhelage ein lineares Hubspiel (a) aufweist, längs dessen keine hydraulische Öffnungswirkung eintritt.

5. Anordnung nach Anspruch 1, dadurch gekennzeichnet, daß dem Druckschalter (8) ein Drosselrückschlagventil (9) vorgeordnet ist.

6. Anordnung nach Anspruch 1, dadurch gekennzeichnet, daß dem Druckschalter (8) eine Abfallverzögerungs-Schaltung zugeordnet ist.

0233554

FIG.1

FIG.2

FIG.3